# EUROPÄISCHE PATENTSCHRIFT

(11) **EP 0 737 649 B1**
(45) Veröffentlichungstag und Bekanntmachung des Hinweises auf die Patenterteilung: **07.03.2001**
(21) Anmeldenummer: 96105395.6
(22) Anmeldetag: 04.04.1996
(51) Int. Cl.: C01G 1/10, C10G 1/10, A62D 3/00

(54) **Verfahren zum Entsorgen von PVC, vorzugsweise zur Gewinnung von gereinigtem und/oder reinem Chlorwasserstoff**
Process for PVC disposal, preferably for extraction of cleaned and/or pure hydrogene chloride
Procédé d'élimination de PVC, afin d'extraire de préférence du gaz hydrochlorique épuré et/ou pur

(30) Priorität: 15.04.1995 DE 19514200; 16.09.1995 DE 19534448
(43) Veröffentlichungstag der Anmeldung: 16.10.1996
(73) Patentinhaber: Buna Sow Leuna Olefinverbund GmbH, 06258 Schkopau (DE)
(72) Erfinder: Feix, Gunter, Dr., 06122 Halle (DE); Adler, Bernhard, Dr., Prof., 06132 Halle (DE); Kirsch, Dietmar, Dr., 06144 Halle (DE); Schimmel, Karl-Heinz, Dr., 06110 Halle (DE); Rauchstein, Klaus-Dieter, Dr., 06184 Döllnitz (DE); Henkel, Klaus-Dieter, Dr., 06124 Halle (DE); Adler, Roland, Dr., Prof., 06217 Merseburg (DE)

(56) Entgegenhaltungen:
- EP-A- 0 662 503
- EP-A- 0 687 692
- CH-A- 611 548
- DE-A- 2 538 813
- DE-A- 2 925 520
- DE-A- 4 223 663
- DE-A- 4 446 964
- DE-C- 4 012 397

## Beschreibung

Die Erfindung betrifft ein Verfahren zum Entsorgen von PVC, gegebenenfalls mit Anteilen an anderen organischen oder anorganischen Bestandteilen und/oder an anderen Kunststoffen unter stofflicher und/oder energetischer Verwertung der festen, flüssigen und gasförmigen Abprodukte. Die bevorzugte Anwendungsrichtung des Verfahrens ist die Rückgewinnung von gereinigtem und/oder reinem Chlorwasserstoff.

Das rohstoffliche Recycling von Alt-PVC ist von großem allgemeinen Interesse in bezug auf die Reduzierung von Sondermüll und den daraus resultierenden Gefahren für die Umwelt, die Schließung des Chlorkreislaufs durch die Rückgewinnung von Chlorwasserstoff sowie die Wiedergewinnung von Energie.
Im Ergebnis des rohstofflichen Recyclings von Alt-PVC wird entweder gasförmiger oder in Form von Salzsäure vorliegender Chlorwasserstoff erhalten. Für eine weitere Nutzung werden an die Reinheit dieses Produktes sehr hohe Anforderungen gestellt.
Für den Einsatz des Chlorwasserstoffes in einer Oxichlorierungsanlage z. B. darf die Verunreinigung mit Schwermetallen ein Wert von 1 mg/kg nicht überschreiten. Der Gehalt von Fluor sollte weniger als 1 Vol.-ppm sein.
Zur Aufarbeitung von Alt-PVC unter Wärmerückgewinnung und Rückgewinnung von wasserfreiem Chlorwasserstoff ist nach DE 42 23 663 AI ein Verfahren bekannt geworden, bei welchem das Alt-PVC in Gegenwart von Sauerstoff bei 500 bis 1000 °C verbrannt wird.
Dabei wird dem Brenngut soviel gasförmiges Chlor oder Chlorkohlenwasserstoffe beigemischt, bis das Gesamtatomverhältnis von Wasserstoff zu Chlor mindestens 1 : 1 beträgt.
Das abgekühlte Verbrennungsgas wird anschließend in einem Quenchverfahren unter Einleitung von wäßriger Salzsäure auf 50 bis 120 °C abgekühlt. Das restliche Verbrennungsgas wird in einem weiteren Schritt auf 0 bis 2 °C abgekühlt, so daß ein wasserfreies Gas mit den wesentlichen Bestandteilen CO₂ und HCl entsteht. Bei diesen hohen Verbrennungstemperaturen und der Anwesenheit von Sauerstoffbesteht jedoch die Gefahr der Bildung von polychlorierten Dibenzodioxinen oder Dibenzofuranen. Weiterhin ist von Nachteil, daß im Restgas ein Gemisch aus HCI und CO₂ vorliegt, zu dessen Trennung weitere aufwendige Verfahrensschritte erforderlich sind. Weitere Verbrennungsverfahren beschreiben DE 43 01 814 und DE 28 27 761.

Der wesentliche Nachteil derartiger Verbrennungsverfahren besteht in der Notwendigkeit, große Rauchgasmengen zu reinigen und zu emittieren. Andere Verbrennungsverfahren, wie das nach US 40 40 865 und US 39 32 118, setzen den entstehenden Chlorwasserstoff zu unlöslichen Salzen um und verzichten damit auf eine Rückgewinnung von Chlorwasserstoff
Auch bei Pyrolyseverfahren werden verschiedene Methoden zur chemischen Bindung des Chlorwasserstoffes angegeben. Der Einsatz basischer Materialien wie z. B. Kalkstein beschreiben DE 29 25 620 und JP 73 37 640. Die Bildung von Haliden durch Zugabe geeigneter Metallverbindungen werden in JP 71 10 26 51 und JP 72 14 444 angegeben.
Eine analoge Vorgehensweise findet sich bei Verwertungsverfahren für Kunststoffgemische, z. B. in Müllverbrennungsanlagen, mit einem begrenzten PVC-Anteil.
Bei Pyrolyseverfahren entfallen die großen Rauchgasmengen und es müssen nur noch die anfallenden Spaltprodukte aufgearbeitet werden. Die bekannten Pyrolyseverfahren werden in unterschiedlichen Reaktoren und unter differenzierten Bedingungen durchgeführt.
Bei hohen Temperaturen arbeiten die Verfahren nach JP 49 07 87 74, DE 41 39 512 und US 53 59 099. Bedingt durch die hohe Temperatur entsteht bei diesem Verfahren ein breites Produktspektrum, was die Abtrennung eines hochreinen HCI beträchtlich erschwert.
Wesentlich günstiger gestalten sich die Bedingungen bei einer Niedertemperaturpyrolyse.
Bekannt ist ein Verfahren nach JP 62 04 99 89 für Gemische von Kunststoffen, das ohne Katalysator bei 350 °C arbeitet.
Vorgeschlagen wurde außerdem ein Verfahren zur Pyrolyse von PVC im Temperaturbereich von 200 bis 500 °C, bei dem die autokatalytische Wirkung des entstehenden Chlorwasserstoffs genutzt wird.
Um auch bei niedrigen Temperaturen gute HCl-Ausbeute zu erzielen, werden in einigen Fällen auch Katalysatoren eingesetzt. Beispiele sind US 53 15 055, JP 71 77 845, JP 48 04 29 91 und JP 81 58 788.
Der Einsatz derartiger Katalysatoren verursacht jedoch zusätzliche Kosten, da erhebliche Mengen benötigt werden, die letztlich im Prozeß verbraucht werden.

Ein besonders geeigneter Pyrolysereaktor ist der Wirbelschichtreaktor. Sein Einsatz erfolgte bisher vorwiegend für PVC-freie Einsatzstoffe bzw. für Kunststoffgemische mit einem geringen PVC-Anteil. Derartige Verfahren sind in DE 40 12 397 und JP 51 03 352 beschrieben. Von Vorteil für die Durchführung der Pyrolyse sind die intensive Vermischung von
Gas und Feststoff, insbesondere die gute Temperaturführung im Wirbelschichtreaktor und die günstigen Voraussetzungen für die Rückführung des Pyrolysegases in den Reaktionsraum zur Gewährleistung der Autokatalyse. Problematisch ist die Durchführung der Pyrolyse bei Unterdruck.
Prinzipiell ebenfalls als Pyrolysereaktor geeignet ist auch der Reaktionsextruder, wie er in US 39 84 288, JP 49 07 87 74, JP 49 07 87 77 und JP 48 07 56 80 beschrieben ist. Bei den genannten Verfahren werden Kunststoffgemische ohne oder mit einem geringen PVC-Anteil eingesetzt.

Vorteile dieses Reaktortyps sind die Möglichkeiten der Realisierung eines abgestuften Temperaturprofils sowie die Unterstützung der Reaktionsaktivierung durch den Extrusionsdruck.
Nachteilig ist die Störanfälligkeit der Technik durch Verkleben und Verstopfen. Die Möglichkeiten für die Realisierung eines Unterdruckes im Reaktionsraum sind sehr beschränkt und nur über die Entgasungseinrichtung partiell machbar.
Anwendbar sind weiterhin auch Reaktoren, bei denen das Alt-PVC als Festbett oder Wanderbett angeordnet ist. Hier bestehen besonders günstige Voraussetzungen für einen Betrieb im Unterdruckbereich, während das Einbringen der erforderlichen Wärme Probleme bereiten kann. Bevorzugte Ausführungen sind Trommelreaktoren, z. B. DE 29 25 202.
Der Einsatz von Drehrohröfen wird in DE 28 44 741 beschrieben.
Maßnahmen zur Zerkleinerung des Alt-PVCs müssen beim Einsatz aller Reaktortypen vorgesehen werden. Der größte Aufwand ist dabei für Wirbelschichtreaktoren und der geringste für Drehrohröfen erforderlich. Die notwendige Entsorgung der anfallenden festen Rückstände, des Pyrolysekokses, erfolgt in einer nachgeschalteten Verbrennungs- oder Vergasungsstufe. So werden in den Verfahren nach den DE 32 39 428, DE 41 39 512 und DE 43 05 964 Vergasungsstufen eingesetzt. Allerdings dient diese Verfahrensstufe bei den beschriebenen Verfahren nur der Entsorgung des Pyrolyserückstandes unter Nutzung der freiwerdenden Energie.

Es ist bekannt, daß das in Verbrennungsanlagen anfallende Rauchgas bzw. Pyrolysegas nach unterschiedlichen Verfahren aufbereitet wird.

Das verbreitetste Verfahren zur Gewinnung von Chlorwasserstoff aus Abgasen von Verbrennungsanlagen ist das Abtrennen von Salzsäure durch Kondensation (DE 42 23 663), wobei das verbleibende HCl-Restgas (mit 45 - 55 % Inertgasanteil) einer Oxichlorierungsanlage zugeführt wird.

Nach einem bekannten Verfahren werden flüssige und gasförmige Chlorkohlenwasserstoffrückstände mit Luft bei Temperaturen von 1400 - 1650 °C verbrannt. Anschließend erfolgt die Quenchung der ausströmenden Gase. Zur Herstellung von wasserfreien Chlorwasserstoff wird mit einer Calciumchloridlösung gequencht. Die aus dem Quenchtank mit Calciumchlorid beladene Salzsäure wird mit der verdünnten Salzsäure des Adsorptionsturmes in eine unter Druck betriebene Extraktivdestillationskolonne geleitet, in der die Abtrennung von der Calciumchloridlösung erfolgt. Das Kopfgas der Kolonne gelangt in einen Solekühler und einen Nebelabscheider, aus dem das wasserfreie Chlorwasserstoffgas als Produktgas abgezogen wird.
Die im Sumpf der Extraktivdestillationskolonne anfallende Calciumchloridlösung wird in den Quenchtank zurückgeführt.

Ein weiteres Verfahren zur Rückgewinnung von Chlorwasserstoff aus der Salzsäure des Quenchkreislaufes wird in DE 33 34 677 bekanntgegeben. In diesem Verfahren wird die Salzsäure in einem dem Absorber nachgeschalteten Wärmetauscher zunächst verdampft und anschließend in einem weiteren Wärmetauscher überhitzt. Der überhitzte Säuredampf steht zur weiteren Verwendung (lt. Patent der Oxichlorierung) zur Verfügung.
Des weiteren werden auch Verfahren vorgestellt in denen die Abgase von Verbrennungsanlagen von sämtlichen Chlorwasserstoffen gereinigt werden. Zum Beispiel in EP 03 93 402 erfolgt die Abtrennung der HCl-Verunreinigung aus dem Rauchgas über eine zweistufige Wäsche mit Wasser. Nach dieser Wäsche erhält man verdünnte Salzsäure und HCl-freies Abgas. Nach
DE 40 12 397 wird während der Wirbelschichtpyrolyse von Kunststoffabfällen Spaltgas mit Ammoniak vermengt eingeblasen. Bei der Abkühlung des Gasstromes bildet sich Ammoniumchlorid und/oder Ammoniumhalogenid, das bei Abkühlung ausfällt und abgetrennt wird.

Nachteilig wirken sich bei den bekannten HCI-Rückgewinnungsverfahren zum einen, ein hoher verbleibender Inertgasanteil (45 - 55 %) im Chlorwasserstoffgas [DE 42 23 663] und zum anderen ein hoher apparativer Aufwand mit großem Energiebedarf [DE 33 34 677] aus.

Der Erfindung liegt die Aufgabe zugrunde, aus Polyvinylchlorid, gegebenenfalls mit Anteilen anderer organischer oder anorganischer Bestandteile bzw. mit oder ohne anderen Kunststoffen oxidativ oder pyrolytisch (ohne Anwesenheit von Sauerstoff) Chlorwasserstoff in einer Reinheit zu gewinnen, die eine direkte Weiterverarbeitung gestattet.
Diese Aufgabe wird durch die in den Patentansprüchen dargestellte Erfindung gelöst.
Vorzugsweise wird der Chlorwasserstoff bei chlorarmen Chargen in bekannter Weise durch Verbrennung oder Vergasung bei Reaktionsbedingungen gewonnen, die den Anteil des mit dem Chlorwasserstoff im chemischen Gleichgewicht stehenden Chlors minimiert (DEACON-Gleichgewicht), während chlorreiche Chargen bei Abwesenheit von Sauerstoff und unter Ausnutzung der katalytischen Wirkung chlorhaltiger Abfallprodukte als Niedertemperaturbeschleuniger so pyrolytisch gespalten werden, daß das im Polyvinylchlorid enthaltene Chlor praktisch vollständig zu Chlorwasserstoff reagiert.
Dazu werden Polyvinylchlorid, polyvinylchloridhaltige Kunststoffe oder Kunststoffmischungen zusammen mit Niedertemperaturbeschleuniger und HCl-Gas in einen Reaktor eingetragen, um im Temperaturbereich von 200 °C bis 750 °C und bei Drücken von 0,1 bar bis 120 bar durch katalytisch induzierte Dehydrohalogenierung Chlorwasserstoff abzuspalten.
Durch den Einsatz von bei Reaktionsbedingungen instabilen chlorhaltigen Verbindungen, hier. Produktionsabfälle von unstabilisiertem Polyvinylchlorid, aber auch durch Zugabe von Chlorwasserstoff konnte festgestellt werden, daß die Dehydrohalogenierungsreaktion beschleunigt und die Chlorwasserstoffbildung bei tieferen Temperaturen durchgeführt werden kann.
Polyvinylchlorid gibt durch Dehydrohalogenierung Chlorwasserstoff in zwei Stufen ab. Die erste Stufe der unkatalysierte Reaktion liegt zwischen ca. 250 °C bis 370 °C, die zweite Stufe schließt sich unmittelbar an und ist bei ca. 550 °C abgeschlossen.

Die eingesetzten katalytischen Verbindungen wirken insbesondere bei tieferen Temperaturen und beschleunigen die Dehydrohalogenierung der ersten Stufe, so daß die Reaktion schon bei 200 °C mit Erfolg durchgeführt werden kann. Der bei diesem Teilprozeß aus dem Polyvinylchlorid entstehende Chlorwasserstoff wirkt wiederum katalytisch auf die Pyrolysereaktion ein. Als Vorteil dieses Niedertemperaturpyrolyseverfahrens zeigt sich der vergleichsweise geringe Anfall an organischen Verunreinigungen und Schwermetallchloriden des entstehenden Chlorwasserstoffs.
Besonders vorteilhaft ist das Verfahren dann durchzuführen, wenn der in die Reaktionszone zurückgeführte Chlorwasserstoff direkt mit dem Pyrolyseprodukt vermischt wird. Dazu eignet sich besonders die Pyrolyse in der Wirbelschicht, wobei der Chlorwasserstoff die Funktion des Wirbelgases übernimmt.

Die Dehydrohalogenierung kann, falls erforderlich, auch bei Reaktionstemperaturen bis 750 °C durchgeführt werden, mit zunehmender Temperatur entstehen in sehr kurzen Verweilzeiten neben Chlorwasserstoff vornehmlich kondensierbare Kohlenwasserstoffe und Chlorkohlenwasserstoffe, vorzugsweise Aromaten und chlorierte Aromaten und ein trockener, weitgehend chlorfreier Pyrolysekoks.
Überraschenderweise zeigte sich, daß die Pyrolysereaktion durch Anlegen von Unterdruck beschleunigt werden kann.

Das entstandene Pyrolysegas besteht überwiegend aus Chlorwasserstoff und Kohlenwasserstoffen vorzugsweise Aromaten und chlorierten Aromaten.
Diese Stoffe werden durch partielle Kondensation als Wertstoffe gewonnen und gleichzeitig damit die Reinheit des Pyrolysegases verbessert.

Die indirekte Kühlung wird durch den für den nachfolgenden Membrantrennprozeß erforderlichen Druck von z. B. 20 bar bereits bei diesem Druck durchgeführt. Die indirekte Kühlung führt direkt bzw. über eine geeignete thermische Trennung zu stofflich nutzbaren, praktisch wasserfreien Kondensaten aus überwiegend Aromaten und anderen organischen Komponenten.

Durch Trennung über HCl-selektive Polymermembranen bei Drücken von über 5 bar wird das Gasgemisch effektiv hinsichtlich organischer Komponenten gereinigt.

Die Abtrennung der in der HCl-reichen Fraktion verbleibenden Begleitstoffe, z. B. CO₂ erfolgt mit Sorptionsprozessen so, daß eine Weiterverarbeitung, z. B. in einer Ethylenoxidationsanlage direkt weiterverarbeitet werden kann.

Gegenüber dem Stand der Technik weist das erfindungsgemäße Verfahren zur Entsorgung von Alt-PVC folgende Vorteile auf:
- maximale Energierückgewinnung durch die Verkopplung von Pyrolyse- und Verbrennungs- bzw. Vergasungsanlage,
- maximale rohstoffliche Verwertung durch die näherungsweise vollständige Rückgewinnung des im Alt-PVC enthaltenen Chlorwasserstoffes durch die Verkopplung von Pyrolyse- und Verbrennungs- bzw. Vergasungsanlage und die zusätzliche Nutzung von Kondensationsprodukten,
- kostengünstige Reinigung des bei der Pyrolyse anfallenden Chlorwasserstoffes,
- Reduzierung des Rauchgasanfalls und des damit verbundenen Reinigungsaufwandes durch Einsatz eines Pyrolyseverfahrens.

Die Erfindung wird an folgenden Beispielen näher erläutert:

### Beispiel 1

Bei der Niedertemperaturpyrolyse werden als Pyrolysegut Abmischungen von PVC-Fenstermaterial (Zusammensetzung gemäß Tabelle 1) mit einem Zusatz von 1,1 Ma.-% unstabilisiertem PVC-Abfallmaterial eingesetzt.
Das zerkleinerte Material wird kontinuierlich in einer Menge von 12,5 t/h in einen Wirbelschichtreaktor eingetragen. Bei einer Reaktionstemperatur von 250 °C und 1 bar abs. Druck entsteht ein Pyrolysegas mit einem Chlorwasserstoffanteil von über 78 Ma-%. Die Pyrolyseprodukte bestehen aus chlorarmen Pyrolysekoks (ca. 45 %), gasförmigen und chlorierten Kohlenwasserstoffen sowie anderen gleichwertigen Produkten (ca. 12 %) und Chlorwasserstoff (ca. 43 %). Der Pyrolysekoks wird in einer Menge von 5,6 t/h in einer Drehrohrofenanlage verbrannt.

Die Pyrolysegase werden nach einer Druckerhöhung auf 7 bar in mehreren Temperaturstufen kondensiert. In einer ersten Stufe werden bei 40 °C schwerflüchtige Kondensate abgeschieden, in einer zweiten Stufe kondensieren bei 5 °C leichter flüchtige Komponenten und gasförmige Produkte. Die Kondensate werden in einem Olefincracker stofflich genutzt. Die weitere Reinigung des gasförmigen Chlorwasserstoffes erfolgt über eine organophile Membran. Dabei erfolgt eine Abtrennung der verbliebenen Kohlenwasserstoffe vom Chlorwasserstoff bis unter 0,001 Ma-%. Das Permeat, bestehend aus organischen Komponenten und den Chlorwasserstoffgas, wird in den Pyrolysereaktor zurückgeführt.

**Tabelle 1**

| Zusammensetzung des PVC-Fenstermaterials | |
|---|---|
| Bestandteile | Masseprozent |
| PVC | 72,8 |
| PVC-Polymercompounds | 12,8 |
| Kreide | 5,2 |
| Titandioxid | 3,4 |
| Bleicompound | 4,1 |
| weitere Zusätze | 1,7 |

### Beispiel 2

Bei der Pyrolyse wird als Pyrolysegut PVC-Fenstermaterial mit einem Zusatz von 1,1 Ma.-% unstabilisiertem PVC-Abfallmaterial eingesetzt.
Das auf ca. 0,125 cm³ zerkleinerte Material (Zusammensetzung gemäß Tabelle 1) wird in Chargen zu 0,2 kg in einem Laborquarzrohrreaktor untergebracht, an dem Vakuum angelegt wird. Bei einer Reaktionstemperatur von 750 °C und 1 bar abs. Druck entsteht ein Pyrolysegas mit einem Chlorwasserstoffanteil von über 68 Ma-%. Die Pyrolyseprodukte bestehen aus chlorarmen Pyrolysekoks (ca. 37 %), gasförmigen und chlorierten Kohlenwasserstoffen sowie anderen gleichwertigen Produkten (ca. 20 %) und Chlorwasserstoff (ca. 43 %).
Die Pyrolysegase werden nach einer Druckerhöhung auf 10 bar in einer Temperaturstufe kondensiert. Bei einer Temperatur von 40 °C werden schwerflüchtige Kondensate abgeschieden. Aus dem Kondensat wird in einer Destillation bei 10 bar der restliche Chlorwasserstoff entfernt. Das chlorfreie Kondensat wird in einer Raffinerie als Rohstoff verwendet.

Die weitere Reinigung erfolgt gemäß Beispiel 1.

### Beispiel 3

Bei einer Niedertemperaturpyrolyse wird die in Beispiel 1 verwendete Kunststoffabmischung eingesetzt.
Das zerkleinerte Material (Zusammensetzung gemäß Tabelle 1) wird kontinuierlich in einer Menge von 12,5 t/h in einen Wirbelschichtreaktor eingetragen. Bei einer Reaktionstemperatur von 250 °C und 0,1 bar abs. Druck erhöht sich die Anfangsgeschwindigkeit der Chlorwasserstoffbildung gegenüber den Bedingungen gemäß Beispiel 1 von 23,5 g auf 37,6 g Chlorwasserstoff/kg Chlorwasserstoff im Alt-PVC und Minute.
Die weitere Aufarbeitung erfolgt gemäß den in den Beispielen 1 und 2 beschriebenen Verfahren.

### Beispiel 4

Bei einer Niedertemperaturpyrolyse wird das in Beispiel 1 beschriebene PVC-Fenstermaterial ohne Zusatz von unstabilsierten PVC eingesetzt.
Das zerkleinerte Material (Zusammensetzung gemäß Tabelle 1) wird kontinuierlich in einer Menge von 12,5 t/h in einen Wirbelschichtreaktor eingetragen. Bei einer Reaktionstemperatur von 250 °C und 1 bar abs. Druck ergibt sich eine Anfangsgeschwindigkeit der Chlorwasserstoffbildung von 4,6 g/(kg min).
Die weitere Aufarbeitung erfolgt gemäß den in den Beispielen 1 und 2 beschriebenen Verfahren.

## Patentansprüche

1. Verfahren zum Entsorgen von PVC, gegebenenfalls mit Anteilen an anderen organischen oder anorganischen Bestandteilen und/oder an anderen Kunststoffen unter stofflicher und/oder energetischer Verwertung der festen, flüssigen und gasförmigen Abprodukte, vorzugsweise zur Gewinnung von gereinigtem und/oder reinem Chlorwasserstoff, gekennzeichnet durch
- thermische Rohstoffverwertung selektierter, chlorarmer Chargen mittels Verbrennung oder Vergasung,
- Dehydrochlorierung selektierter, chlorreicher Chargen in einem Pyrolysereaktor
• bei Temperaturen von 200 °C bis 750 °C,
• bei Drücken von 0,1 bar bis 120 bar,
• unter Zusatz chlorhaltiger und bei Reaktionsbedingungen instabiler Abfallprodukte als Niedertemperaturbeschleuniger mit einem Massenanteil von > 0,25 % im Einsatzgemisch,
- partielle mehrstufige Kondensation des Pyrolysegases bei Temperaturen von -40 °C bis zur gewählten Reaktionstemperatur und Drücken zwischen 0,1 bar und 120 bar und stoffliche Verwertung des Kondensates,
- Trennung des Gasgemisches mittels HCl-selektiver Polymermembran
- Abtrennung der in der HCl-reichen Fraktion verbliebenen Begleitstoffe mittels Sorption,
- Rückführung eines gereinigten Gasanteiles in den Pyrolysereaktor mit einem Volumenanteil > 0,25 % bezogen auf das gesamte Pyrolysegas und
- stoffliche und energetische Verwertung der gasförmigen und festen Rückstände in Verbrennungsöfen oder Vergasungsreaktoren durch stoffliche Nutzung des entstandenen HCI sowie Rückgewinnung der freiwerdenden Verbrennungswärme.

2. Verfahren nach Anspruch 1, dadurch gekennzeichnet, daß als Pyrolysereaktor ein Wirbelschichtreaktor, Reaktionsextruder, Wanderbettreaktor oder ein Festbettreaktor verwendet wird.

3. Verfahren nach Anspruch 1, dadurch gekennzeichnet, daß zur Reduzierung der Anteile der bei der Pyrolyse gebildeten flüchtigen HCl-Begleitstoffe das PVC bei Temperaturen von 200 °C bis 350 °C dehydrochloriert wird.

4. Verfahren nach Anspruch 1, dadurch gekennzeichnet, daß als Niedertemperaturbeschleuniger unstabilisiertes PVC eingesetzt wird.

5. Verfahren nach Anspruch 1, dadurch gekennzeichnet, daß die partielle Kondensation einstufig durchgeführt wird.

6. Verfahren nach Anspruch 1, dadurch gekennzeichnet, daß der Membrantrennprozeß bei Drücken zwischen 5 bar und 30 bar durchgeführt wird.

7. Verfahren nach Anspruch 1 bis 6, dadurch gekennzeichnet, daß der rückgeführte Gasanteil Chlorwasserstoff darstellt und bei Prozeßtemperatur der Dehydrochlorierung mit dem zu pyrolysierenden Produkt vermischt wird.

8. Verfahren nach Anspruch 1 bis 7, dadurch gekennzeichnet, daß das entstandene HCI aus der Verbrennung oder Vergasung in Form hochreiner Salzsäure verwertet wird.

9. Verfahren nach Anspruch 1 bis 7, dadurch gekennzeichnet, daß selektierte, chlorarme Chargen dem Pyrolysereaktor und selektierte, chlorreiche Chargen der Verbrennung oder Vergasung zugeführt werden.

10. Verfahren nach Anspruch 1 bis 7, dadurch gekennzeichnet, daß die flüssigen Rückstände in Verbrennungsöfen oder Vergasungsreaktoren zugeführt werden.

## Claims

1. A process to dispose PVC including shares of other organic or inorganic components and/or other plastics, if appropriate, using the matter and/or energy from such solid, liquid or gaseous wastes, preferably to make purified and/or pure hydrogen chloride, whereby
- selected, low-chlorine charges are thermally used through combustion or gasification;
- selected, high-chlorine charges are dehydrochlorinated in a pyrolysis reactor
• at temperatures from 200°C to 750°C;
• at pressures from 0.1 bar to 120 bar;
• through addition of chlorine-containing wastes, which are unstable under reaction conditions, as a low-temperature accelerator, with a mass fraction of > 0.25% in the feed mixture;
- the pyrolysis gas is partially condensed in several stages at temperatures from -40°C up to the selected reaction temperature and at pressures between 0.1 bar and 120 bar, with material use of the condensate;
- the gas mixture is separated by means of an HCL selective polymer membrane;
- the remaining accompanying substances are separated from the fraction rich in HCl by means of sorption;
- the cleaned gas quantity is returned to the pyrolysis reactor with a volume fraction of > 0.25% related to the total pyrolysis gas; and
- the gaseous and solid residues are materially and energetically used in incinerators or gasification reactors through material use of the resulting HCl, and recovery of the released combustion heat.

2. A process according to claim 1 above, whereby a fluidized-bed reactor, a reaction extruder, a moving bed reactor or a fixed bed reactor are used as the pyrolysis reactor.

3. A process according to claim 1 above, whereby the PVC is dehydrochlorinated at temperatures from 200°C to 350°C to reduce the fractions of volatile HCl accompanying substances that have formed in the pyrolysis.

4. A process according to claim 1 above, whereby non-stabilized PVC is used as a low-temperature accelerator.

5. A process according to claim 1 above, whereby partial condensation is run in a single stage.

6. A process according to claim 1 above, whereby the membrane separation process occurs at pressures between 5 bar and 30 bar.

7. A process according to claims 1 through 6 above, whereby the recycled gas fraction is hydrogen chloride, and is mixed with the product to be pyrolized at the process temperature of dehydrochlorination.

8. A process according to claims 1 through 7, whereby the HCl from combustion or gasification respectively is used as highly pure hydrochloric acid.

9. A process according to claims 1 through 7 above, whereby selected, low-chlorine charges are fed to the pyrolysis reactor and whereby selected, high-chlorine charges are fed to combustion or gasification.

10. A process according to claims 1 through 7 above, whereby liquid residues are fed to incinerators or gasification reactors.

## Revendications

1. Procédé d'élimination de PVC, se trouvant le cas échéant dans d'autres constituants organiques ou inorganiques et/ou dans d'autres matières synthétiques avec utilisation matérielle et/ou énergétique des déchets solides liquides et gazeux, de préférence pour l'extraction de gaz hydrochlorique, caractérisé par
- l'utilisation thermique de matières premières, en charges sélectionnées pauvres en chlore par combustion ou par gazéification,
- la déshydrochloration de charges sélectionnées riches en chlore dans un réacteur de pyrolyse
• par des températures de 200 °C à 750 °C,
• par des pressions de 0,1 bar à 120 bars,
• sous addition de déchets chlorés instables sous les conditions de réaction comme accélérateurs à basse température avec une part en poids > 0,25 % dans le mélange de départ,
- la condensation partielle multiple du gaz de pyrolyse par des températures de -40 °C jusqu'à la température de réaction sélectionnée et des pressions entre 0,1 bar et 120 bars et l'utilisation matérielle du condensat.
- la séparation du mélange gazeux au moyen d'une membrane de polymère sélectrice de HCl,
- la séparation des matières associées qui sont restées dans la fraction riche en HCI par sorption,
- le recyclage d'une partie épurée de gaz dans le réacteur de pyrolyse avec une part en volume > 0,25 % par rapport au volume total du gaz de pyrolyse et
- l'utilisation matérielle et énergétique des déchets gazeux et solides dans les fours de combustion ou les réacteurs de gazéification par la mise en oeuvre du HCI obtenu et la récupération de la chaleur de combustion dégagée.

2. Procédé selon la spécification 1, caractérisé par le fait que le réacteur de pyrolyse utilisé est un réacteur à couche fluidisée, une extrudeuse à réaction, un réacteur à lit mobile ou un réacteur à lit fixe.

3. Procédé selon la spécification 1, caractérisé par le fait que le PVC est déshydrochloré par des températures de 200 °C jusqu'à 350 °C pour réduire les parts associées à HCl des matières volatiles formées lors de la pyrolyse.

4. Procédé selon la spécification 1, caractérisé par le fait qu'un PVC non stabilisé est employé comme accélérateur à basse température.

5. Procédé selon la spécification 1, caractérisé par le fait que la condensation partielle est effectuée à un seul étage.

6. Procédé selon la spécification 1, caractérisé par le fait que le processus de séparation par membrane s'effectue par des pressions entre 5 bars et 30 bars.

7. Procédé selon les spécifications de 1 à 6, caractérisé par le fait que la partie gazeuse recyclée présente du gaz hydrochlorique et sera mélangée par température de déshydrochloration au produit à pyrolyser.

8. Procédé selon les spécifications de 1 à 7, caractérisé par le fait que le HCI produit par combustion ou gazéification est utilisé sous forme d'acide chlorhydrique de grande pureté.

9. Procédé selon les spécifications de 1 à 7, caractérisé par le fait que des charges sélectionnées pauvres en chlore sont apportées au réacteur de pyrolyse et que des charges riches en chlore sont admises à la combustion ou à la gazéification.

10. Procédé selon les spécifications de 1 à 7, caractérisé par le fait que les déchets liquides sont admis aux fours de combustion ou aux réacteurs de gazéification.
